Europäisches Patentamt

European Patent Office

Office européen des brevets

(19)

(11) Publication number: **0 339 875 B1**

(12) ## EUROPEAN PATENT SPECIFICATION

(45) Date of publication of patent specification: **19.01.94** (51) Int. Cl.5: **G11B 11/10**

(21) Application number: **89303971.9**

(22) Date of filing: **21.04.89**

(54) **Method and apparatus for initializing intermediate region between tracks on magnetooptical recording medium.**

(30) Priority: **26.04.88 JP 101253/88**
**27.04.88 JP 102746/88**
**29.06.88 JP 159305/88**

(43) Date of publication of application:
**02.11.89 Bulletin 89/44**

(45) Publication of the grant of the patent:
**19.01.94 Bulletin 94/03**

(84) Designated Contracting States:
**DE FR GB**

(56) References cited:
**EP-A- 0 252 445**
**US-A- 4 410 969**
**US-A- 4 472 748**
**US-A- 4 706 232**

**PATENT ABSTRACTS OF JAPAN vol. 12, no. 23 (P-658)(2870) 23 January 1988, & JP-A-62 175950 (NEC CORP) 01 August 1987,**

(73) Proprietor: **CANON KABUSHIKI KAISHA**
**30-2, 3-chome, Shimomaruko,**
**Ohta-ku**
**Tokyo(JP)**

(72) Inventor: **Iwanaga, Ryuichi**
**872 Shimonoge**
**Takatsu-ku**
**Kawasaki-shi Kanagawa-ken(JP)**
Inventor: **Tsukada, Masaharu**
**Higashi Copo 101**
**950 Chitose**
**Takatsu-ku**
**Kawasaki-shi Kanagawa-ken(JP)**

(74) Representative: **Beresford, Keith Denis Lewis et al**
**BERESFORD & Co.**
**2-5 Warwick Court**
**High Holborn**
**London WC1R 5DJ (GB)**

## Description

BACKGROUND OF THE INVENTION

Field of the Invention

The present invention relates to a method of initializing a magnetooptical recording medium on which tracks onto which information is recorded are formed in parallel and which has intermediate regions among the tracks and to an apparatus for executing this method.

Related Background Art

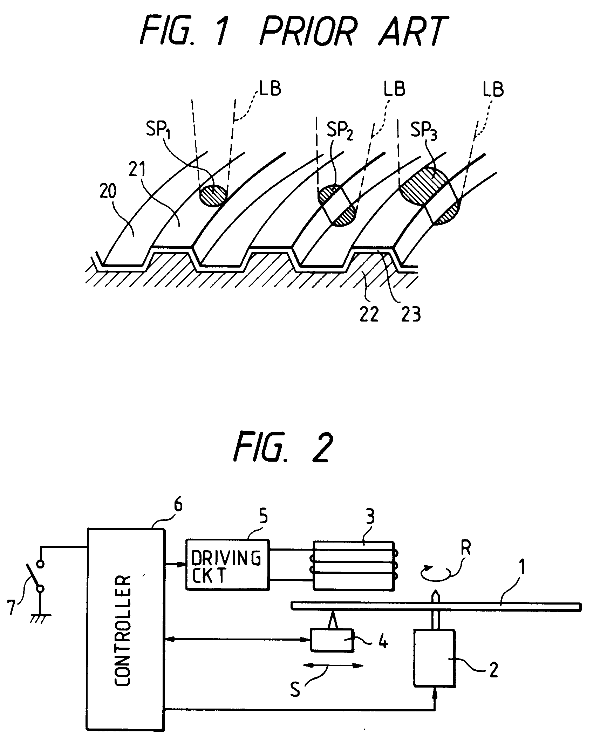

Hitherto, a medium which is used in a magnetooptical storing apparatus has a construction as shown in Fig. 1.

In Fig. 1, reference numeral 22 denotes a substrate. A magnetic film 23 is formed on the surface of the substrate 22. As shown in the diagram, convex-shaped tracks (hereinafter, referred to as "lands") 21 on which information is recorded are formed on the medium. Two non-recording intermediate regions (hereinafter, referred to as "grooves") 20 are formed as concave portions (grooves) at positions adjacent to the land 21. Information is recorded by irradiating a spot-shaped laser beam LB onto the land 21 while applying a bias magnetic field.

Since the magnetizing directions of the magnetic film 23 formed upon manufacturing of the medium are random, the magnetizing directions of the magnetic layer must be once aligned into a predetermined direction and must be initialized. On the other hand, in the case of rewriting the information recorded on the medium, it is also necessary to initialize prior to rerecording.

The initializing operation is executed in a manner such that the laser beam LB having an erasing power is irradiated onto the land 21 while applying a bias magnetic field in the direction opposite to the bias magnetic field upon recording, and a laser beam spot is formed and the land 21 is scanned by the beam spot. Upon scanning, the automatic focusing (AF) and automatic tracking (AT) are executed so as to allow the beam spot of a proper size to be located onto the land and to always obtain a state as shown by a spot $SP_1$.

Therefore, ideally, only the magnetizing directions of the land 21 are aligned to the predetermined direction by the erasing operation.

However, actually, even if the AF and AT are executed, there is a case where the laser beam is partially deviated like a spot $SP_2$ to the groove 20. On the other hand, in the case of using the push-pull system as means for performing the AT, the laser beam to record, reproduce, and erase is also used as a beam for the AT, so that the beam spot has an extent such as to be always partially deviated like a spot $SP_3$ to the groove 20.

In the cases of the spots $SP_2$ and $SP_3$ as mentioned above, the laser beam is also irradiated onto a part of the groove 20. However, the power of the beam which is irradiated onto the groove is so small that the initializing operation to align the magnetizing directions to a predetermined direction is not substantially executed for the groove and the random magnetizations remain.

Upon recording of information, the laser beam LB having the recording power is irradiated onto the land 21 while applying the bias magnetic field in the direction opposite to the direction upon initialization, a beam spot is formed, the land 21 is scanned by the beam spot, and the laser beam is turned ON and OFF in accordance with the information to be recorded. Even in the case of the recording mode the states of the spots $SP_2$ and $SP_3$ shown in the diagram are realized, since the power of the laser beam which is irradiated onto the groove 20 is also small similarly to the case in the erasing mode, the recording operation im not substantially executed for the groove and the random magnetizations remain.

The information recorded on the medium is reproduced by detecting the reflected lights from the spot. However, it is actually impossible to form the beam spot so as not to be deviated from the land 21. Therefore, the reflected lights from the medium include the lights reflected from the portion of the land 21 and the lights reflected by the portion of the groove 20.

As mentioned above, since the magnetizing directions of the groove 20 are held random, the signal components due to the reflected lights from the portion of the groove 20 become noises for the normal signal due to the reflected lights from the portion of the land 21.

Consequently, the conventional magnetooptical storing apparatus has a problem such that a reproducing error rate is somewhat high.

JP-A-62 175950 discloses a magnetooptical recording method in which two light beams are arranged simultaneously to record information in a first track and to delete previously recorded information in a second track.

US-A-4 472 748 describes a magnetooptical apparatus in which a single objective lens focuses a constant erasing light beam and a modulated recording light beam onto adjacent recording tracks on a mangetooptical recording medium. The erasing beam is of such a cross-section that it partially extends over intermediate regions between the recording tracks.

EP-A-0 252 445 describes a magnetooptical recording apparatus including two optical heads.

Each optical head generates a first light beam for erasing and writing an information signal on a recording track in a magnetooptical recording medium, and a second light beam for reading an information signal from the recording medium.

## SUMMARY OF THE INVENTION

It is an object of the present invention to solve the problems in the conventional techniques as mentioned above and to provide method and apparatus for initializing a magnetooptical recording medium for reducing the noises upon reduction.

The above object of the invention is accomplished by a method of initializing a magnetooptical recording medium as set out in claim 1 and a corresponding apparatus as set out in claim 3.

As another aspect of the apparatus based on the invention, an apparatus having two optical heads for respectively irradiating laser beams to a track and intermediate region is also considered.

## BRIEF DESCRIPTION OF THE DRAWINGS

Fig. 1 is a perspective view for explaining an initializing method of a conventional magnetooptical recording medium;

Fig. 2 is a schematic diagram showing an embodiment of a megnetooptical storing apparatus according to the present invention;

Fig. 3 is a block diagram showing focusing and tracking servo systems of the apparatus shown in Fig. 2;

Fig. 4 is a flowchart for explaining the operation of the apparatus shown in Fig. 2;

Fig. 5 is a schematic diagram showing an optical head section in another embodiment of a magnetooptical storing apparatus based on the invention; and

Fig. 6 is a schematic diagram showing a construction of further another embodiment of a magnetooptical storing apparatus based on the invention.

## DETAILED DESCRIPTION OF THE PREFERRED EMBODIMENTS

Fig. 2 is a schematic diagram showing an embodiment of a magnetooptical storing apparatus based on the present invention. Reference numeral 1 denotes an erasable magnetooptical disk and has a construction similar to that shown in Fig. 1. The disk 1 is rotated and driven in the direction indicated by an arrow (R) at a speed of 3000 r.p.m. by a spindle motor 2. Reference numeral 4 denotes an optical head which is movable in the radial directions (indicated by arrows S) of the disk 1 by a linear motor (not shown). Although not shown, a semiconductor laser, an optical system, actuators for the AF and AT, servo sensors for the AF and AT, and a photo sensor to detect a reproduction signal are arranged in the optical head 4. Reference numeral 3 denotes an electromagnet for generating a bias magnetic field to record and erase. The bias megnetic field is uniformly applied to the recording/erasing region on the disk. Reference numeral 5 denotes a driving circuit to drive the electromagnet 3. The driving circuit 5 has the function to change over the magnetic field direction of the electromagnet 3 in accordance with the erasing or recording operation in response to a control signal from a controller 6. Reference numeral 7 denotes a switch to indicate the groove erasure.

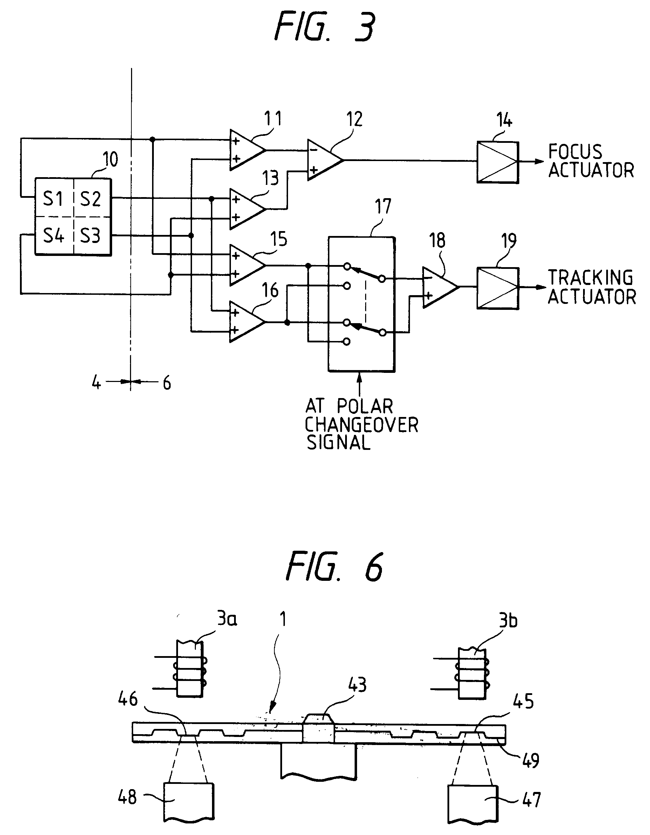

Fig. 3 is a block diagram showing a focus servo system and a tracking servo system in the apparatus shown in Fig. 2. In the embodiment, the astigmatism system is used for the AF operation and the push-pull system is used for the AT operation. Such AF and AT operations have been described in detail in, for instance, U.S.P. No. 4,410,969 and the like.

In Fig. 3, reference numeral 10 denotes four divided sensors and their light reception amounts are indicated by $S_1$ to $S_4$. The sensors 10 are provided in the optical head 4.

The focus servo is executed in a manner such that the arithmetic operation of $(S_1 + S_3) - (S_2 + S_4)$ is performed by operational amplifiers 11, 12, and 13, the result of the calculation is input to a focus driving circuit 14, the phase compensation and electric power amplification are executed by the focus driving circuit 14, and the focus actuator is driven.

The tracking servo is executed by using operational amplifiers 15, 16, and 18, a change-over switch 17, and a tracking driving circuit 19. In accordance with an AT polar change-over signal which is input from the controller 6 to the change-over switch 17, in the case of the land tracking, the result of the calculation of $(S_1 + S_4) - (S_2 + S_3)$ is input to the tracking driving circuit 19 and in the case of the groove tracking, the result of the calculation of $(S_2 + S_3) - (S_1 + S_4)$ is input to the driving circuit 19.

The tracking driving circuit 19 executes the phase compensation and power amplification and drives the tracking actuator.

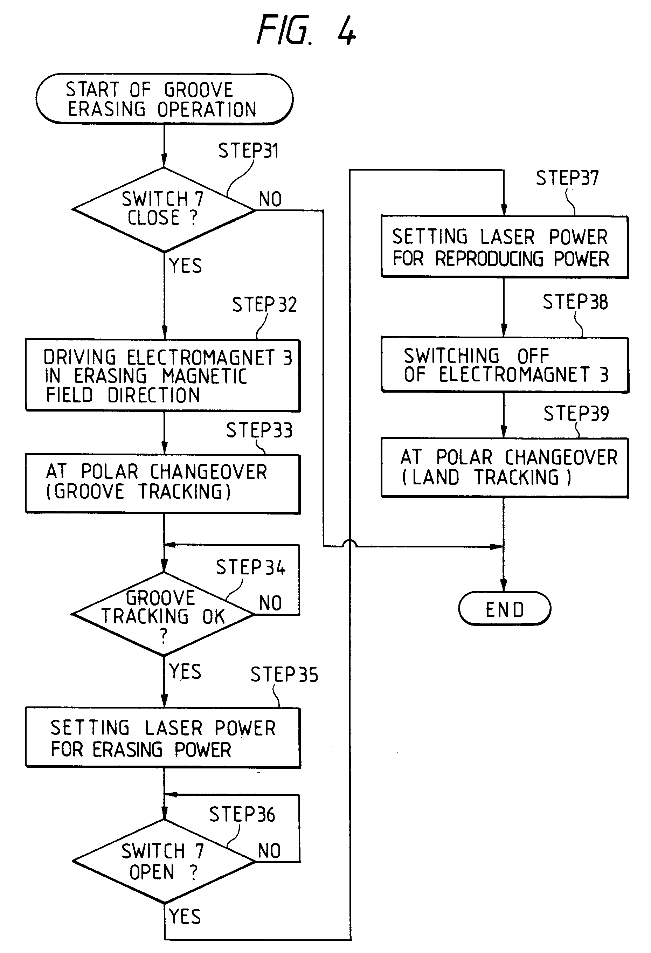

Fig. 4 is a flowchart showing an operating sequence in the groove erasing mode in the embodiment.

The groove erasing operation will now be described hereinbelow in accordance with the flowchart of Fig. 4 with reference to Figs. 2 and 3.

The groove erasing operation is started by closing the switch 7 from the outside. That is, the controller 6 first discriminates whether the switch 7 has been closed or not (step 31). If it is determined in step 31 that the switch 7 is open, the processing routine is finished and the erasing operation of the groove is not executed.

If it is decided in step 31 that the switch 7 has been closed, the electromagnet 3 is then driven so as to generate the erasing magnetic field (step 32). The AT polar change-over signal is sent to the change-over switch 17 in the AT servo circuit provided in the controller 6 (step 33). Thus, the laser beam spot irradiated onto the land 21 is moved to the groove 20.

A check is then made (in step 34) to see if the beam spot has correctly been moved and the groove tracking can be executed (OK) or not. The apparatus waits until the groove tracking becomes OK.

After the groove tracking became OK, the laser power is set to the erasing power (in step 35). After that, the groove erasure is executed while executing the groove tracking. The groove erasure is executed until the switch 7 is opened.

If it is decided in step 36 that the switch 7 is open, the laser power is then set to the reproducing power (in step 37). The electromagnet 3 is turned off (in step 38). The AT polar change-over signal is input to the switch 17 (in step 39). Thus, the laser beam spot is moved from the groove 20 to the land 21.

The groove erasing operation is finished in this manner.

In the embodiment, the initialization (erasure) is executed by selectively scanning the land and groove by the laser beam while switching the polarity of the tracking servo.

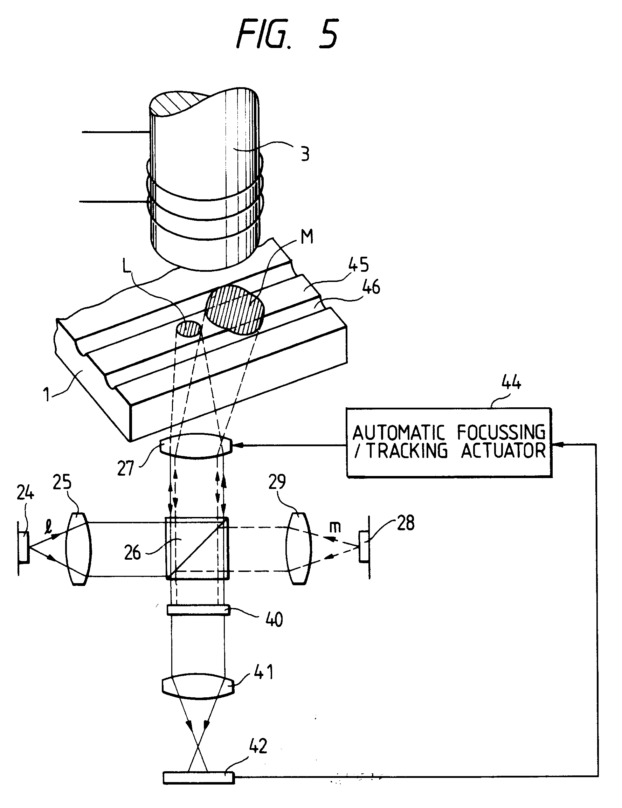

Fig. 5 is a schematic diagram showing an optical head section in another embodiment of a magnetooptical storing apparatus based on the invention. The portions other than the optical head section are constructed in a manner similar to Fig. 2.

In Fig. 5, the electromagnet 3 to form the erasing magnetic field is arranged over the magnetooptical disk 1 having guide grooves 46 and recording tracks 45. On the other hand, as laser beam irradiating means, there are provided: semiconductor lasers 24 and 28; condenser lenses 25 and 29; a polarizing beam splitter 26; a filter 40; convergent lenses 27 and 41; a photodetector 42; and an automatic focusing/tracking actuator 44. The convergent lens 27 is held so as to be movable in two axial directions of the direction of the optical axis and the direction perpendicular to the tracks. The semiconductor laser 24 emits a laser beam $\ell$ having a wavelength of 830 nm. The semiconductor laser 28 emits a laser beam m having a wavelength of 780 nm.

The operation of the embodiment will now be described.

The erasing magnetic field is formed by supplying a current of the coil of the electromagnet 3 and in this state, both of the semiconductor lasers 24 and 28 are energized to emit the laser beams, respectively.

The laser beam $\ell$ emitted from the semiconductor laser 24 is transmitted through the polarizing beam splitter 26 and convergent lens 27 and is focused onto the magnetooptical disk 1, thereby forming a spot L. The reflected lights from the disk 1 of the spot L (beam $\ell$) sequentially pass through the convergent lens 27, polarizing beam splitter 26, filter 40, and convergent lens 41 and are led to the photodetector 42. The photodetector 42 comprises four divided PIN photodiodes. The photoelectric conversion is executed in each of the PIN photodiodes and the resultant electric signals are sent to the automatic focusing/tracking actuator 44. In response to the electric signals, the actuator 44 moves the convergent lens 27 in the direction of the optical axis and in the direction perpendicular to the track, thereby executing the focusing and tracking adjustments.

On the other hand, the laser beam m emitted from the semiconductor laser 28 is also transmitted through the polarizing beam splitter 26 and convergent lens 27 and a spot M having a beam diameter which is equal to or larger than the track pitch width is formed onto the disk 1 in a manner similar to the beam $\ell$. The light spot M always irradiates the recording track 45 and the regions of at least 1/2 or more of the guide grooves 46 on both sides of the recording track 45. On the other hand, the reflected lights of the spot M are blocked by the filter 40 and do not reach the photodetector 42. Therefore, the focusing and tracking adjustments of the convergent lens 27 are executed on the basis of the reflected lights of the laser beam $\ell$. However, since the beam m is focused onto the disk 1 by the convergent lens 27 in a manner similar to the beam $\ell$, the light spots L and M are simultaneously moved by the same distance in the direction perpendicular to the track. The light spot M follows the light spot L and is accurately moved while being subjected to the focusing and tracking servo operations. Thus, the magnetizing directions of the track 45 and guide grooves 46 are uniformly aligned to the direction of the magnetic field generated by the electromagnet 3 and the initialization is executed.

With the foregoing construction, the laser power for the tracking control was set to 1 mW and the erasing power was set to 10 mW, the rotating speed of the disk was set to 1800 r.p.m., and the erasing operation was executed while applying the magnetic field by the electromagnet 3. Thus, the noise level of the reproduction signal was reduced as compared with the case of erasing by the same beam diameter as that in the case of the reproducing mode in the conventional apparatus. On the other hand, since both of the recording track and the guide tracks can be erased by the single erasing operation, the initializing time could be reduced.

Fig. 6 is a schematic diagram showing a construction of further another embodiment of a magnetooptical storing apparatus based on the invention. In the diagram, the magnetooptical disk 1 is placed so as to be rotatable around a spindle 43. A magnetic layer 49 is formed on the guide grooves 46 and recording tracks 45. As means for initializing the disk 1, there are provided: electromagnets 3a and 3b; an optical head 47 to erase the recording tracks; and an optical head 48 to erase the guide grooves. The electromagnets 3a and 3b are arranged on the recording track 45 and the guide groove 46 so as to face each other in the radial direction, respectively. The optical heads 47 and 48 are arranged at positions on the side opposite to the disk 1 corresponding to the electromagnets 3a and 3b so as to have the similar positional relation.

An initializing method of the embodiment will now be described.

Magnetic fields are generated in the same direction by supplying currents to coils of the electromagnets 3a and 3b. In this state, laser beams are irradiated onto the magnetic layer 49 on the recording track 45 and guide groove 46 from the optical head 47 to erase the recording track and from the optical head 48 to erase the guide groove. By the irradiation of the laser beams, a temperature of the magnetic layer 49 rises, so that the coercive forces in the relevant portions decrease. When the coercive forces are smaller than the bias magnetic fields generated by the electromagnets 3a and 3b, the magnetizing directions are uniformly aligned to the direction of the bias magnetic fields, so that the initialization is executed. By executing such an initialization for the whole circumference of the disk 1, both of the recording track 45 and the guide groove 46 can be simultaneously erased.

The invention is not limited to the foregoing embodiments. For instance, although the recording track and guide groove have almost simultaneously been erased in the above embodiment, it is also possible to construct in a manner such that information of only the guide grooves (groove portion) is previously erased upon manufacturing of a medium and information in the recording portion (land portion) is erased just before data is written.

The present invention also incorporates all of such application examples without departing from the spirit and scope of the appended claims of the invention.

## Claims

1. A method of initializing a magnetooptical recording medium (1) having a plurality of recording tracks (21,45) onto which information is recorded, and a plurality of intermediate regions (20,46), which are kept free from having information recorded thereon alternating with the recording tracks (21,45), in which at least one recording track is traced by a light beam which is tracking-controlled so that a central portion of the light beam coincides with a central portion of the recording track, the light beam having sufficient power when a magnetic field having a predetermined direction is applied to the recording medium, to align the direction of magnetization of the track in a uniform direction;

   characterized in that at least one intermediate region is traced by a light beam which is tracking-controlled so that a central portion of the light beam coincides with a central portion of the intermediate region and which has a sufficient power, when a magnetic field having a predetermined direction is applied to the recording medium, to align the direction of magnetization of the intermediate region in a uniform direction.

2. A method according to claim 1, wherein said recording track and said intermediate region are traced by different light beams.

3. An apparatus for initializing a magnetooptical recording medium (1) having a plurality of recording tracks (21,45) onto which information is recorded and a plurality of intermediate regions (20,46) which are kept free from having information recorded thereon alternating with the recording tracks (21,45), said apparatus comprising: means (4) for tracing a light beam on the recording medium (1), means for controlling the tracking of the light beam so that a central portion of the light beam coincides with a central portion of the track (21,45); and means (3,5) for applying to the recording medium (1) a magnetic field having a predetermined direction so that the light beam causes the direction of magnetization of the track to be aligned in a uniform direction;

   the apparatus being characterised in that it includes means for controlling a light beam such that a central portion of the light beam coincides with a central portion of at least one intermediate region, the light beam having a sufficient power when the magnetic field having a predetermined direction is applied to the recording medium to align the direction of magnetization of the intermediate region in a uniform direction.

4. An apparatus according to claim 3, including control means (6,10,15,16,18,19) for controlling the tracking of the light beam,

and switching means (17) for switching a polarity of said control means to effect the tracking control of said light beam on the intermediate region.

5. An apparatus according to claim 4, wherein said control means comprises a photodetector (10) for receiving reflected light of the light beam from the recording medium (1) so as to detect a tracking error signal, and a tracking actuator for changing the position of intersection of the light beam on the recording medium (1) according to the tracking error signal.

6. An apparatus according to claim 5, wherein said switching means comprises a switching circuit (17) for reversing the polarity of said tracking error signal input into said tracking actuator.

**Patentansprüche**

1. Verfahren zur Initialisierung eines megneto-optischen Aufzeichnungsmediums (1) mit einer Vielzahl von Aufzeichnungsspuren (21, 45), auf die Informationen aufgezeichnet sind, und mit einer Vielzahl von zwischenliegenden Bereichen (20, 46), die frei von aufgezeichneter Information gehalten werden und die mit den Aufzeichnungsspuren (21, 45) abwechseln, von denen wenigstens eine Aufzeichnungsspur von einem Lichtstrahl abgetastet wird, der spurgesteuert ist, so daß ein zentraler Teil des Lichtstrahls mit dem zentralen Teil der Aufzeichnungsspur zusammmentrifft, wobei der Lichtstrahl über eine ausreichende Leistung verfügt, die Richtung der Magnetisierung der Spur in eine einheitliche Richtung auszurichten, wenn ein magnetisches Feld mit einer vorbestimmten Richtung zum Aufzeichnungsmedium anliegt;

dadurch gekennzeichnet, daß wenigstens ein zwischenliegender Bereich von einem Lichtstrahl abgetastet wird, der spurgesteuert ist, so daß ein zentraler Teil des Lichtstrahls mit dem zentralen Teil des zwischenliegenden Bereiches zusammentrifft, und der über eine ausreichende Leistung verfügt, die Richtung der Magnetisierung des zwischenliegenden Bereiches in eine einheitliche Richtung auszurichten, wenn ein magnetisches Feld mit einer vorbestimmten Richtung zum Aufzeichnungsmedium anliegt.

2. Verfahren nach Anspruch 1, bei dem die Aufzeichnungsspur und der zwischenliegende Bereich von unterschiedlichen Lichtstrahlen abgetastet werden.

3. Vorrichtung zur Initialisierung eines magneto-optischen Aufzeichnungsmediums (1) mit einer Vielzahl von Aufzeichnungsspuren (21, 45), auf die Informationen aufgezeichnet werden, und mit einer Vielzahl von zwischenliegenden Bereichen (20, 46), die frei von aufgezeichneter Information gehalten werden , mit:

Mitteln (4), die einen Lichtstrahl auf dem Aufzeichnungsmedium (1) abtasten, Mittel, die die Spureinstellung des Lichtstrahls steuern, so daß ein zentraler Teil des Lichtstrahls mit einem zentralen Teil der Spur (21, 45) zusammentrifft, und mit Mitteln (3, 5), die ein magnetisches Feld mit vorbestimmter Richtung an das Aufzeichnungsmedium (1) anlegen, so daß der Lichtstahl die Richtung der Magnetisierung der Spur zu einer einheitlichen Ausrichtung veranlaßt;

dadurch gekennzeichnet, daß Mittel vorgesehen sind, die den Lichtstrahl derart steuern, daß ein zentraler Teil des Lichtstrahls mit wenigstens einem zwischenliegenden Bereich des Lichtstrahls zusammentrifft, wobei der Lichtstrahl über eine ausreichende Leistung verfügt, die Richtung der Magnetisierung des zwischenliegenden Bereiches in eine einheitliche Richtung auszurichten, wenn ein magnetisches Feld mit einer vorbestimmten Richtung zum Aufzeichnungsmedium anliegt.

4. Vorrichtung nach Anspruch 3, mit Steuermitteln (6, 10, 15, 16, 18, 19), die die Spurführung des Lichtstrahls steuern, und mit einem Umschalter (17), der die Polarität der Steuermittel umschaltet, um die Spurführungssteuerung des Lichtstrahls auf dem zwischenliegenden Bereich zu bewirken.

5. Vorrichtung nach Anspruch 4, desssen Steuermittel einerseits einen Photodetektor (10) enthalten, der vom Aufzeichnungsmedium reflektiertes Licht des Lichtstrahls empfängt, um so ein Spurführungs-Fehlersignal festzustellen, und die andrerseits ein Spurführungs-Stellglied enthalten, das die Auftreffstelle des Lichtstrahls auf dem Aufzeichnungsmedium gemäß dem Spurführungs-Fehlersignal ändert.

6. Vorrichtung nach Anspruch 5, dessen Umschalter einen Umschaltkreis (17) enthält, der die Polarität des Spurführungs-Fehlersignals für das Spurführungs-Stellglied umkehrt.

## Revendications

1. Procédé pour initialiser un support d'enregistrement magnéto-optique (1) ayant plusieurs pistes (21, 45) d'enregistrement sur lequel des informations sont enregistrées, et plusieurs régions intermédiaires (20, 46), sur lesquelles aucune information n'est enregistrée, qui alternent avec les pistes d'enregistrement (21, 45), dans lequel au moins une piste d'enregistrement est parcourue par un faisceau lumineux qui est commandé en suivi de manière qu'une partie centrale du faisceau lumineux coïncide avec une partie centrale de la piste d'enregistrement, le faisceau lumineux ayant une puissance suffisante, lorsqu'un champ magnétique d'une direction prédterminée est appliqué au support d'enregistrement, pour aligner la direction de magnétisation de la piste dans une direction uniforme ;

caractérisé en ce qu'au moins une région intermédiaire est parcourue par un faisceau lumineux qui est commandé en suivi de manière qu'une partie centrale du faisceau lumineux coïncide avec une partie centrale de la région intermédiaire, et qui a une puissance suffisante, lorsqu'un champ magnétique d'une direction prédéterminée est appliqué au support d'enregistrement, pour aligner la direction de magnétisation de la région intermédiaire dans une direction uniforme.

2. Procédé selon la revendication 1, dans lequel ladite piste d'enregistrement et ladite région intermédiaire sont parcourues par des faisceaux lumineux différents.

3. Appareil pour initialiser un support d'enregistrement magnéto-optique (1) ayant plusieurs pistes d'enregistrement (21, 45) sur lequel des informations sont enregistrées et plusieurs régions intermédiaires (20, 46), sur lesquelles aucune information n'est enregistrée, alternant avec les pistes d'enregistrement (21, 45), ledit appareil comportant : des moyens (4) pour faire parcourir à un faisceau lumineux le support d'enregistrement (1), des moyens pour commander le suivi du faisceau lumineux afin qu'une partie centrale du faisceau lumineux coïncide avec une partie centrale de la piste (21, 45) ; et des moyens (3, 5) pour appliquer au support d'enregistrement (1) un champ magnétique ayant une direction prédéterminée afin que le faisceau lumineux amène la direction de magnétisation de la piste à être alignée dans une direction uniforme ;

l'appareil étant caractérisé en ce qu'il comprend des moyens pour commander un faisceau lumineux de manière qu'une partie centrale du faisceau lumineux coïncide avec une partie centrale d'au moins une région intermédiaire, le faisceau lumineux ayant une puissance suffisante, lorsque le champ magnétique d'une direction prédéterminée est appliqué au support d'enregistrement, pour aligner la direction de magnétisation de la région intermédiaire dans une direction uniforme.

4. Appareil selon la revendication 3, comprenant des moyens de commande (6, 10, 15, 16, 18, 19) destinés à commander le suivi du faisceau lumineux, et des moyens de commutation (17) destinés à commuter une polarité desdits moyens de commande pour effectuer la commande de suivi du faisceau lumineux sur la région intermédiaire.

5. Appareil selon la revendication 4, dans lequel lesdits moyens de commande comprennent un photodétecteur (10) destiné à recevoir de la lumière réfléchie du faisceau lumineux provenant du support (1) d'enregistrement afin de détecter un signal d'erreur de suivi, et un actionneur de suivi destiné à modifier la position d'intersection du faisceau lumineux sur le support (1) d'enregistrement en fonction du signal d'erreur de suivi.

6. Appareil selon la revendication 5, dans lequel lesdits moyens de commutation comprennent un circuit (17) de commutation destiné à inverser la polarité dudit signal d'erreur de suivi appliqué en entrée audit actionneur de suivi.

## FIG. 1 PRIOR ART

## FIG. 2

# FIG. 3

# FIG. 6

# FIG. 4

```
        ┌─────────────────────┐
        │ START OF GROOVE     │
        │ ERASING OPERATION   │
        └─────────────────────┘
                  │
                  │         STEP31
                  ▼
              ╱─────────╲
             ╱ SWITCH 7  ╲  NO
             ╲  CLOSE ?   ╱───────────┐
              ╲─────────╱             │
                  │ YES               │
                  │                   │
                  │     STEP32        │
                  ▼                   │
        ┌─────────────────────┐       │
        │ DRIVING ELECTROMAGNET 3     │
        │ IN ERASING MAGNETIC │       │
        │ FIELD DIRECTION     │       │
        └─────────────────────┘       │
                  │     STEP33         │
                  ▼                    │
        ┌─────────────────────┐        │
        │ AT POLAR CHANGEOVER │        │
        │ (GROOVE TRACKING)   │        │
        └─────────────────────┘        │
                  │                    │
                  ▼      STEP34         │
              ╱─────────╲               │
             ╱  GROOVE   ╲  NO          │
             ╲ TRACKING OK╱─────────────┤
              ╲    ?    ╱               │
               ╲─────╱                  │
                  │ YES    STEP35        │
                  ▼                     │
        ┌─────────────────────┐          │
        │ SETTING LASER POWER │          │
        │ FOR ERASING POWER   │          │
        └─────────────────────┘          │
                  │                      │
                  ▼      STEP36           │
              ╱─────────╲                 │
             ╱ SWITCH 7  ╲  NO            │
             ╲  OPEN ?    ╱───────────────┘
              ╲─────────╱
                  │ YES
```

STEP37 — SETTING LASER POWER FOR REPRODUCING POWER

STEP38 — SWITCHING OFF OF ELECTROMAGNET 3

STEP39 — AT POLAR CHANGEOVER (LAND TRACKING)

END

# FIG. 5